# EUROPÄISCHE PATENTSCHRIFT

(11) **EP 1 479 918 B1**
(45) Veröffentlichungstag und Bekanntmachung des Hinweises auf die Patenterteilung: **12.10.2005**
(21) Anmeldenummer: 04001472.2
(22) Anmeldetag: 02.04.2003
(51) Int. Cl.: F04D 29/58

(54) **Gebläsemodul für einen Kraftfahrzeugsitz**
Blower for a motor vehicle seat
Souffleur pour un siège de véhicule automobile

(43) Veröffentlichungstag der Anmeldung: 24.11.2004
(62) Teilanmeldung aus: 03007403.3
(73) Patentinhaber: Catem GmbH & Co. KG, 76863 Herxheim bei Landau (DE)
(72) Erfinder: Bohlender, Franz, 76870 Kandel (DE); Mann, Gerald, 76149 Karlsruhe (DE); Zeyen, Michael, 76819 Landau/Queichheim (DE)
(74) Vertreter: Grünecker, Kinkeldey, Stockmair & Schwanhäusser Anwaltssozietät

(56) Entgegenhaltungen:
- WO-A-91/12149
- US-A- 5 493 870
- US-A1- 2003 019 223
- US-B1- 6 541 737

## Beschreibung

Die Erfindung bezieht sich auf einen Kraftfahrzeugsitz und Gebläsemodul für einen solchen Kraftfahrzeugsitz.

Um den Komfort in einem Kraftfahrzeug zu erhöhen, zählen beheizte und belüftete Sitze bereits zum Standard. Die Sitzbeheizung und die Sitzbelüftung sind jedoch üblicherweise voneinander getrennte Systeme. Der Aufwand an Montage durch die notwendige elektrische Verkabelung und die Anzahl von Bauteilen ist sehr groß. Ein erheblicher Aufwand ist auch erforderlich, wenn die seitlichen Wangen beheizt oder belüftet werden sollen. Die Beheizung durch einen in Schlaufen gelegten Heizdraht oder in Form eines Folienheizelementes vermittelt eine punktuelle nicht homogene Wärmeübertragung. Insbesondere bei Heizdrähten besteht auch die Gefahr von "hot spots", d.h. beheizten Stellen mit geringer Wärmeabfuhr.

Ein wesentliches Problem der Hersteller von Kraftfahrzeugen besteht darin, dass aufwendiger Komfort teuer ist und deshalb nur als Sonderausstattung angeboten werden kann, weil er bei den damit verbundenen Kosten nicht von allen Kunden gewünscht wird. Sonderausstattungen führen aber beim Kraftfahrzeughersteller zu logistischen Problemen und Problemen in der Lagerhaltung, was sich wiederum auf die Kosten auswirkt.

Ein mit hohem Komfort beheizter Kraftfahrzeugsitz kann wegen der damit verbundenen Kosten nur noch als Sonderausstattung angeboten werden. Um die angesprochenen Probleme beim Hersteller von Kraftfahrzeugen zu minimieren geht die vorliegende Erfindung deshalb von folgendem Ansatz aus:

Es wird ein "Einheitssitz" angeboten, in dem ohne wesentlichen Zusatzaufwand bereits alle Vorkehrungen getroffen sind, um ohne Aufwand eine "Komfortheizung" nachzurüsten, indem alle dafür erforderlichen Komponenten, mit Ausnahme der teuren Aggregate schon vorgesehen sind. Bei Bedarf kann dann der Kraftfahrzeugsitz einfach nachgerüstet werden.

US 5,493,870, welches den nächstliegenden Stand der Technik darstellt, offenbart die alle Merkmale des Oberbegriffs des Anspruchs 1.

Bei einem Kraftfahrzeugsitz nicht im Schutzumfang der Erfindung, in den bereits ein für die Luftführung und -verteilung eingearbeitetes Gewirke integriert ist, hat sich herausgestellt, dass dieses Gewirke auch ohne ein eingesetztes Gebläsemodul und auch im Sommerbetrieb, also ohne Beheizung, vorteilhaft ist, weil es einen Luftaustausch zwischen den Oberflächenabschnitten gestattet und sich die beim Sitzen entstehende Feuchtigkeit verteilt und nach außen abgeführt wird. Es bedeutet für den Hersteller des Kraftfahrzeugs praktisch keinen Mehraufwand, den Kraftfahrzeugsitz für die "Komfortheizung" vorzubereiten, um sie im Bedarfsfall nachzurüsten.

Es ist nicht unproblematisch ein Gebläsemodul mit einer Heizleistung von ca. 300 Watt so zu bauen, dass es sich zum Nachrüsten in einem "Einheitssitz" eignet. Verständlicherweise kann man es dem Käufer, der nicht an der "Komfortheizung" interessiert ist, nicht zumuten, einen Kraftfahrzeugsitz zu akzeptieren, der optisch schon signalisiert, dass er sich eine solche Sonderausstattung nicht geleistet hat. Der Einheitssitz muss deshalb so gestaltet sein, dass er einerseits ohne Komfortheizung akzeptierbar, durch die Anpassung an den Gebläsemodul keine nennenswerten Mehrkosten verursacht, und dennoch eine einfache Nachrüstung zulässt. Mit dem Kraftfahrzeugsitz nach Anspruch 1 erscheinen alle diese Forderungen erfüllt.

Das Gebläsemodul nach Anspruch 1 ist an die obigen Bedürfnisse angepasst, indem es eine Bauform aufweist, die eine geringe Bauhöhe aufweist, bedingt durch das Radialgebläse und die in einer Ebene angeordneten weiteren Komponenten.

Anhand eines in der Zeichnung dargestellten Ausführungsbeispiels wird die Erfindung näher erläutert. Es zeigen:

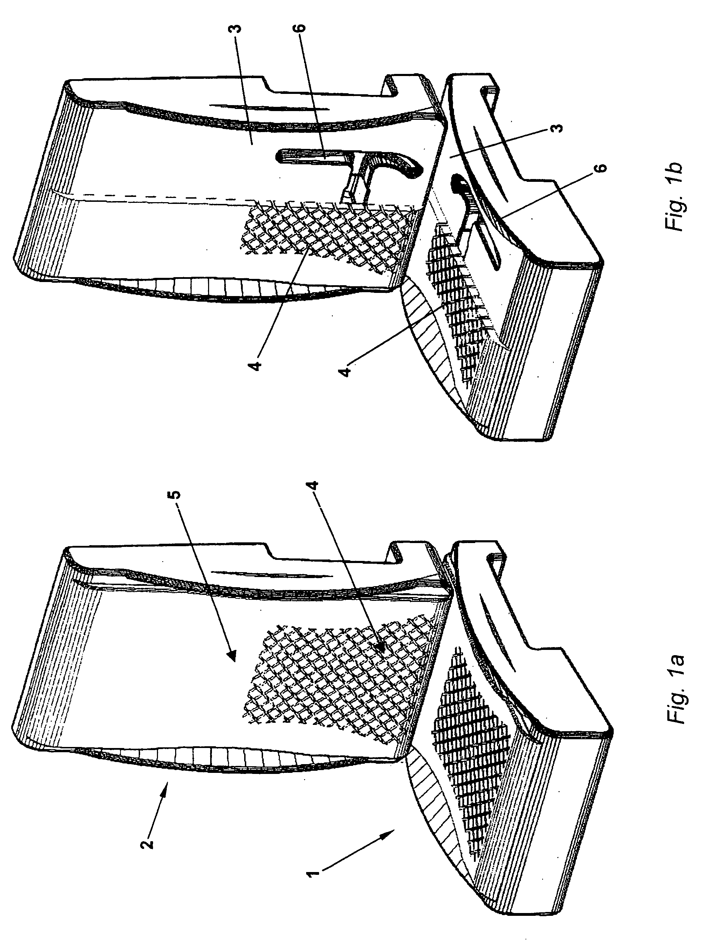

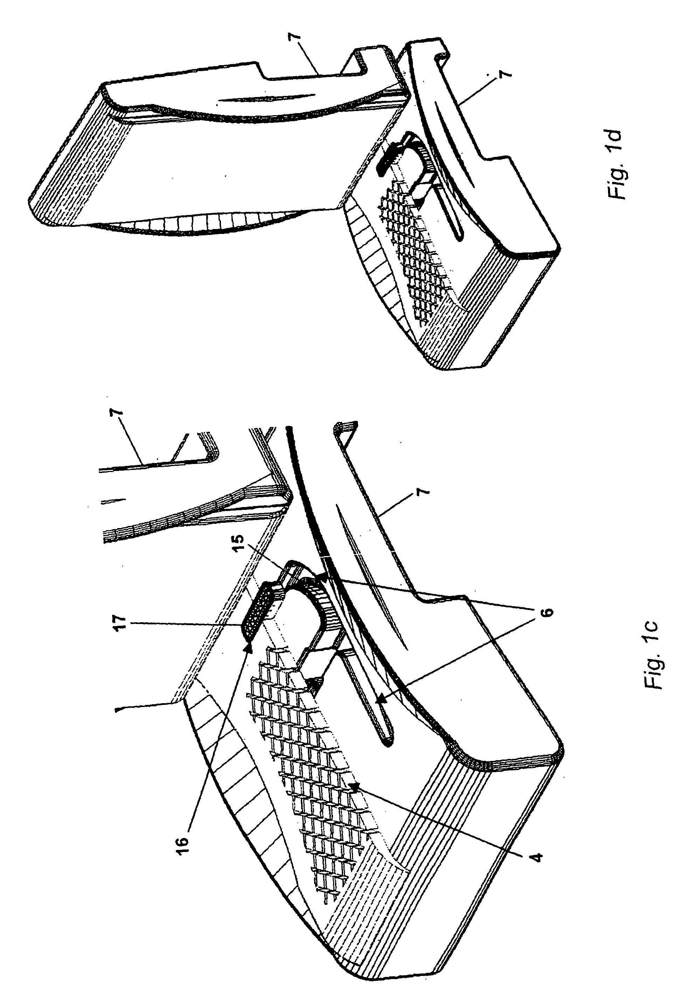

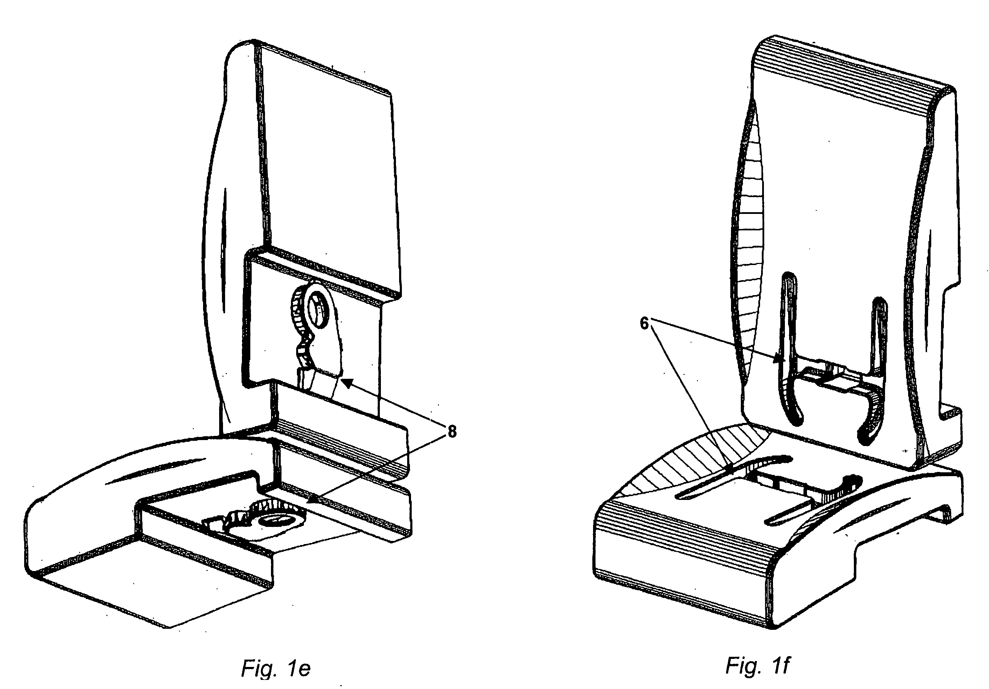

FIG. 1 (1a bis 1f) den Kraftfahrzeugsitz in unterschiedlichen Ansichten,
FIG. 2 die Zellenstruktur des Gewirkes in Detailansicht,
FIG. 3 das Gebläsemodul mit abgenommenem Deckel.

Der Kraftfahrzeugsitz weist in üblicher Form ein Sitzpolsterteil 1 und eine Rückenlehne 2 auf. Sowohl das Sitzpolsterteil 1, als auch die Rückenlehne 2 bestehen im wesentlichen aus einem Stützkörper 3 besonders vorteilhaft aus Hartschaumstoff, beispielsweise Polyurethan, aber auch als Federkernsitz ,in dem die erforderlichen Befestigungsschienen und -rahmen integriert sind. Auf die Oberfläche des Hartschaumstoffs ist ein Gewirke 4 aufgeklebt auf dem der äußere Bezug 5, beispielsweise Velour oder Leder liegt.

In den Hartschaumstoff sind Luftströmungskanäle 6 vorgesehen, die in einer Kammer 7 münden und auf ihren gesamten Längen zu dem Gewirke 4 hin offen sind.

Zwischen der Kammer 7 und dem Luftaustrittskanal des Gebläsemoduls ist eine elastische Abdichtung 14 vorgesehen, um die Übertragung von Vibrationen zu verhindern. Das Gewirke 4 hat eine Stärke von etwa 1 cm und besteht aus einzelnen wabenförmigen Zellen von jeweils etwa 1 qcm. Die Zellen sind untereinander über Fasern verbunden, die sich unter Belastung nicht vollständig zusammendrücken lassen, so dass sich in die Kammer 7 eingeblasene Luft über die gesamte Fläche des Gewirkes 4 verteilt und gleichmäßig an allen Stellen des Bezugs 5 austreten kann.

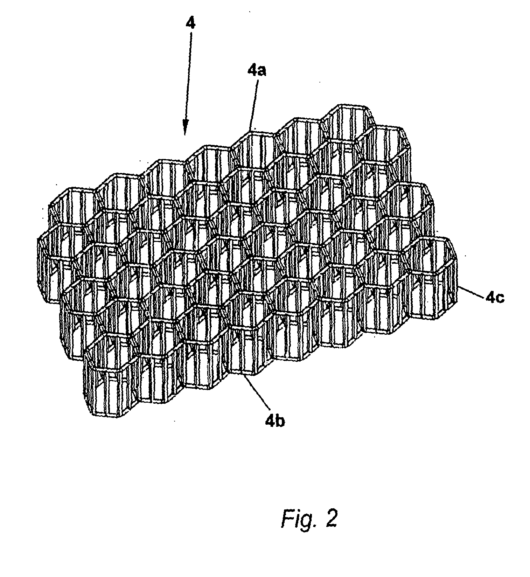

Das in FIG. 2 näher dargestellte Gewirke 4 besteht z.B. aus einem wabenförmigen Nylongeflecht mit einer Grundschicht 4a und einer Deckschicht 4b und einer Vielzahl von Abstandshaltern 4c zwischen diesen Schichten 4a, 4b. Grund- und Deckschicht 4a, 4b weisen an ihren Kanten miteinander verbundene Zellen von etwa 60 qmm auf. Sie sind gebildet durch einen aus etwa 20 Einzelfäden gebildeten Zwirn, der einen Durchmesser von etwa 0,05 mm aufweist. Zumindest an den Eckpunkten sind die Zellen der sich gegenüberliegenden Schichten 4a, 4b durch Abstandshalter 4c aus demselben Material miteinander verbunden und im unbelasteten Zustand auf einem Abstand von etwa 1 cm gehalten. Die Abstandshalter 4c sind vorzugsweise bogenförmig ausgebildet, um dem Gewirke 4 eine vorgegebene Elastizität zu verleihen. Wünschenswert ist eine Elastizität oder Nachgiebigkeit, die bei einem anfänglichen Flächendruck von 0 bis etwa 20 g/qcm praktisch noch zu keinen Verformungen führt und dann bei einem ansteigenden Flächendruck bis zu 100 g/qcm zu einer annähernd linearen Annäherung der beiden Schichten 4a, 4b führt, aber auch bei maximaler Flächenbelastung immer noch einen Luftaustausch zwischen den beiden Schichten ermöglicht.

Damit sich die von dem Gebläsemodul 8 eingeblasene Luft (Warm- oder Kaltluft) möglichst gleichmäßig auch in die den Luftströmungskanälen 6 entfernten Bereiche verteilt, muss dafür gesorgt sein, dass der Strömungswiderstand pro Fläche des Oberflächenbezugs 5 deutlich größer ist, als derjenige des Gewirkes 4. Bei einem Oberflächenbezug aus Leder sind in dem Leder eine Vielzahl von Durchgangsöffnungen im gegenseitigen Abstand von etwa 4 mm und einem Durchmesser von etwa 1 mm vorgesehen.

In dem dargestellten Ausführungsbeispiel ist sowohl das Sitzpolsterteil 1, als auch das Rückenteil 2 mit einem Gebläsemodul 8 versehen, die jeweils in einer Kammer 9 bzw. Ausnehmung im unteren Teil des Sitzpolsterteils 1 bzw. dem hinteren Teil der Rückenlehne 2 vorgesehen sind. Sowohl mit, als auch ohne eingesetzten Gebläsemodul 8 wird die Kammer 9 durch einen nicht näher dargestellten Deckel verschlossen, der die notwendigen Aussparungen für den Gebläsemodul 8 aufweist und außen bündig mit der Sitzkontur abschließt, und lediglich eine oder mehrere, vorzugsweise seitlich angeordnete Luftansaugöffnungen aufweist, die über entsprechende Kanäle zum Gebläsemodul 8 führen.

Das Sitzpolsterteil 1 ist im Eckbereich zur Rückenlehne 2 mit einem kastenförmigen Ausströmer 16 versehen, um an dieser Stelle wahlweise zusätzlich Luft austreten zu lassen. Der Ausströmer 16 ist eingangsseitig mit dem Luftströmungskanal 6 verbunden und ausgangsseitig mit einem Gitter 17 abgeschlossen.

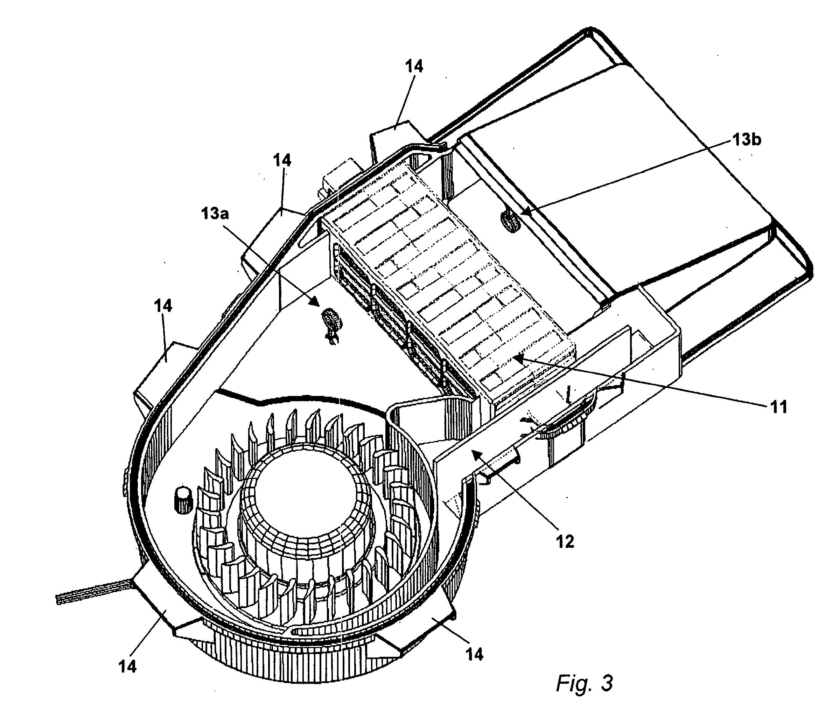

Das Gebläsemodul 8 ist in FIG. 3 näher dargestellt. Er besteht aus einem flachen Kasten von etwa 3 cm Bauhöhe in dem nebeneinander ein Radialgebläse 10, ein vorzugsweise aus PTC-Elementen aufgebautes Heizregister 11, eine auf einer Platine aufgebaute elektrische Steuerung 12 und jeweils ein Temperatursensor 13a bzw. 13b angeordnet sind. Am Außenumfang des Kastens ist eine Anzahl von Befestigungslaschen 14 vorgesehen, die dazu dienen, den Kasten mit entsprechenden Gegenstücken im Stützkörper 3 zu verbinden. Die Temperatursensoren 13a bzw. 13b sind jeweils im Kalt- bzw. Warmlufttrakt vorgesehen und mit der elektronischen Steuerung 12 verbunden. Die elektronische Steuerung 12 ist weiterhin über nicht näher dargestellte Leitungen mit Kraftfahrzeugbordnetz, dem Radialgebläse 10, und entsprechenden vorzugsweise im Sitzbereich angebrachte Steuerelemente verbunden, über die sich die Heizungsstärke und die Gebläsedrehzahl unabhängig voneinander einstellen lassen.

Die elektronische Steuerung 12 arbeitet mit folgendem Funktionsprofil:

### Winterbetrieb - Heizung:

Unmittelbar nach dem Einschalten der Heizung läuft das Radialgebläse 10 über etwa 5 sec langsam auf die eingestellte Nenndrehzahl hoch, um die noch im Sitz befindliche Kaltluft langsam austreten zu lassen. Die gewünschte Heizleistung wird geregelt an das Heizregister abgegeben, wobei die Regelung derart ausgebildet ist, dass darauf Rücksicht genommen wird, dass der Generator nicht überbelastet wird. Es wird also unter Umständen weniger Heizleistung entnommen, als sie der Benutzer anfordert. Die Drehzahl des Radialgebläses 10 ist entweder unabhängig einstellbar oder wenigstens teilweise mit der Heizleistung gekoppelt, wobei bei höheren Heizleistungen auch automatisch die Drehzahl des Radialgebläses 10 erhöht wird.

### Sommerbetrieb - Kühlung:

Im Sommerbetrieb läuft das Radialgebläse 10 zunächst nach dem Einschalten für etwa 3 min auf Saugbetrieb und anschließend auf Blasbetrieb. Das Radialgebläse lässt sich also in zwei Richtungen betreiben, die durch Spannungsumkehr aktivierbar sind. Der Lufteinlass kann für den Sommerbetrieb auch an den Kühlkompressor des Kraftfahrzeugs angeschlossen sein.

Durch die Verwendung eines Radialgebläses 10 ist es gelungen, das Gebläsemodul 8 sehr flach auszubilden, um es sogar in der Rückenlehne unterbringen zu können. Das Radialgebläse 10 saugt die Luft aus einer unmittelbar unter ihm liegenden Öffnung in dem Kasten an, schiebt sie durch an den PTC-Heizelementen entlanggeführte Kanäle in den Ausblastrakt und über einen nicht dargestellten Deckel des Kastens in die Luftströmungskanäle 6, die im Hartschaumstoff der Stützkörper 3 angeordnet sind.

Ist ein Kraftfahrzeug in der ursprünglichen Auslieferung noch nicht, oder noch nicht bei allen Sitzen, mit einem Gebläsemodul 8 versehen worden und muss es nachgerüstet werden, ist diese Nachrüstung sehr einfach. Zu diesem Zweck braucht man lediglich den Deckel der Kammer 7 abzunehmen, Das Gebläsemodul 8 einzusetzen und an die vorzugsweise ebenfalls schon verlegten Steuer- und Versorgungsleitungen anzuschließen.

## Patentansprüche

1. Gebläsemodul (8) zum Einsatz in einem Kraftfahrzeugsitz, der eine Luftansaugöffnung,
wenigstens eine Ausblasöffnung,
ein Radialgebläse (10), welches eingangsseitig mit der Luftansaugöffnung in Verbindung steht,
ein elektrische Heizwiderstände aufweisendes Heizregister (11) und
eine elektronische Steuerung (12) aufweist, wobei dieser Gebläsemodul (8) **dadurch gekennzeichnet ist,**
**dass** im Ansaugtrakt und im Ausblastrakt jeweils ein Temperatursensor (13a, 13b) angeordnet ist, die als Ist-Wertgeber, mit der elektronischen Steuerung (12) verbunden sind, und
**dass** diese Einheiten baulich in einer Ebene nebeneinander angeordnet sind.

## Claims

1. A blower module (8) for use in an automotive vehicle seat comprising an air intake opening,
at least one blow-out opening,
a radial blower (10) which at the inlet side communicates with said air intake opening,
a heat register (11) comprising electric heat resistors,
an electronic controller (12), wherein the blower module (8) is **characterized in that** a temperature sensor (13a, 13b) is arranged in the intake tract and the blow-out tract, respectively, which are connected as actual value sensors to said electronic controller (12), and
said units are constructionally arranged side by side in one plane.

## Revendications

1. Module de soufflage (8) pour placement dans un siège de véhicule automobile, qui comporte une ouverture d'aspiration d'air, au moins une ouverture de soufflage, un soufflet radial (10), lequel est relié côté entrée avec l'ouverture d'aspiration d'air, un registre chauffant (11) présentant des résistances de chauffage électriques et une commande électronique (12), ce module de soufflage (8) étant **caractérisé en ce que** sont disposés respectivement dans l'aile d'aspiration et dans l'aile d'expiration des capteurs de température (13a, 13b), qui sont reliés comme indicateurs de valeur réelle à la commande électronique (12) et **en ce que** ces unités sont disposées, quant à leur construction, les unes à côté des autres sur un plan.
